(19) **Europäisches Patentamt**
**European Patent Office**
**Office européen des brevets**

(11) **EP 2 548 629 B1**

(12) **EUROPEAN PATENT SPECIFICATION**

(45) Date of publication and mention
of the grant of the patent:
**29.04.2015 Bulletin 2015/18**

(51) Int Cl.:
***B01D 53/86*** *(2006.01)*  ***B01J 29/072*** *(2006.01)*
***B01D 53/56*** *(2006.01)*  ***F23G 7/00*** *(2006.01)*

(21) Application number: **11755802.3**

(22) Date of filing: **21.01.2011**

(86) International application number:
**PCT/JP2011/000329**

(87) International publication number:
**WO 2011/114609 (22.09.2011 Gazette 2011/38)**

(54) **DEVICE FOR ELIMINATING N2O WITHIN EXHAUST GAS AND METHOD FOR ELIMINATING N2O**

VORRICHTUNG ZUR ELIMINIERUNG VON N2O AUS EINEM ABGAS UND VERFAHREN ZUR ELIMINIERUNG VON N2O

DISPOSITIF POUR ÉLIMINER LE N2O CONTENU DANS LE GAZ D'ÉCHAPPEMENT ET PROCÉDÉ POUR ÉLIMINER LE N2O

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.03.2010 JP 2010064687**

(43) Date of publication of application:
**23.01.2013 Bulletin 2013/04**

(73) Proprietor: **METAWATER CO., LTD.**
**Chiyoda-ku**
**Tokyo 104-0041 (JP)**

(72) Inventors:
• **YAMADA, Masaki**
**Tokyo 105-6029 (JP)**

• **SASAKI, Toichiro**
**Tokyo 105-6029 (JP)**
• **NOIRI, Natsumi**
**Tokyo 105-6029 (JP)**

(74) Representative: **Naylor, Matthew John et al**
**Mewburn Ellis LLP**
**33 Gutter Lane**
**London**
**EC2V 8AS (GB)**

(56) References cited:
**WO-A1-2009/083593   DE-C1- 19 751 663**
**JP-A- 2002 119 830   JP-A- 2002 119 830**
**JP-A- 2002 206 417   JP-A- 2009 183 827**

**Description**

Technical field

The present invention relates to a system and a method for removing $N_2O$ from exhaust gases discharged, for example, from a sewage sludge incinerator.

Background Art

A small amount of $N_2O$ (nitrous oxide) is contained, for example, in an exhaust gas from a sewage sludge incinerator, an exhaust gas from a boiler of a thermal power plant and an exhaust gas from an automobile. $N_2O$ is one of greenhouse effect gases and has a global warming potential of 310, causing the global warming effect 310 times higher than that caused by carbon dioxide. Therefore, it is strongly desired to reduce the emission of $N_2O$ into the atmospheric air, from the viewpoint of global warming prevention.

Conventionally, techniques of reducing and removing $N_2O$ from exhaust gases by using $N_2O$ decomposition catalysts have been disclosed. The mainstream industrially applicable $N_2O$ decomposition catalyst is an iron-zeolite based catalyst in which iron or an iron ion is supported on zeolite, and, for example, Patent Document 1 describes, as a method for molding an iron-zeolite based catalyst, mixing commercially available ammonium zeolite and $FeSO_4$, with stirring, at room temperature in a ball mill, calcining the resultant powder in a muffle furnace at 400°C to 600°C, and further adding a binder and extrusion-molding the mixture into a columnar shape having a diameter of 2 mm and a length of 5 mm.

Further, as other methods for molding an iron-zeolite based catalyst, techniques of molding such a catalyst into a pellet shape by using an alumina sol or the like have also been disclosed (for example, Patent Document 2).

From the viewpoint of reduction in pressure loss during the steps of removing $N_2O$ from exhaust gases, a honeycomb-shaped catalyst having a large surface area is preferably used. However, the molding of the iron-zeolite based catalyst into a honeycomb shape requires advanced techniques, and involves a problem of industrial impracticability.

A pellet-shaped catalyst, which is easy to mold, is preferably used from the viewpoint of industrial practicability. Such a pellet-shaped catalyst, when packed in a common reactor for use, increases the pressure loss along with the increase in thickness of the catalyst packed layer, but it is known that the problem of increase in pressure loss due to the use of such a pellet-shaped catalyst can be avoided by using a radial reactor disclosed in Patent Document 3. FIG. 4 is a diagram for explaining the radial reactor.

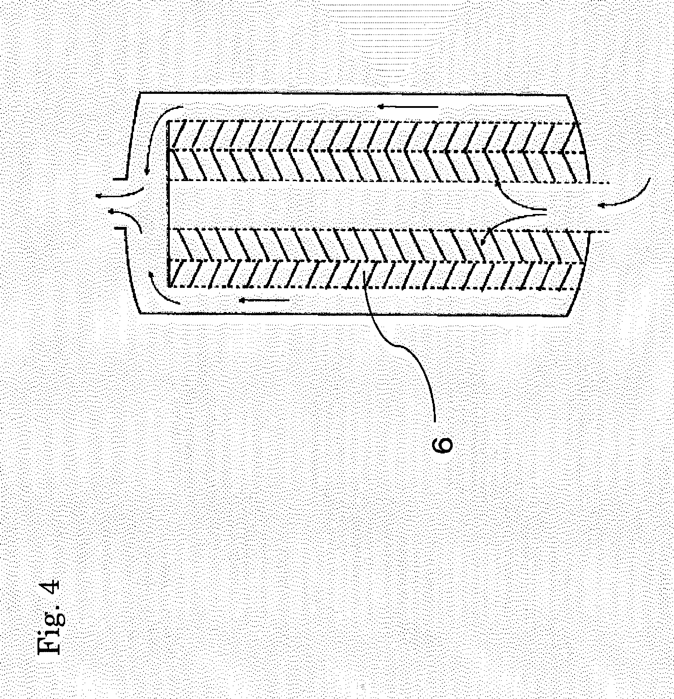

When a pellet-shaped catalyst is packed in a catalyst bed 6 of the radial reactor shown in FIG. 4 to remove $N_2O$ from exhaust gases, a very high $N_2O$ decomposition rate is obtained at the time when a new catalyst is used. However, the catalyst is deteriorated with use, and the $N_2O$ decomposition rate gradually lowers. For example, Tokyo enacted the "Ordinance regarding Environment Ensuring Health and Safety of Citizens (Tokyo Metropolitan Environment Protection Ordinance)" for the purpose of reducing the emission of greenhouse effect gases, which has imposed the obligation to reduce greenhouse effect gases on large-scale business establishments since April in 2010 (revised in June, 2008). This obligation to reduce the emission of greenhouse effect gases involves annual attainment of the amount (proportion) of greenhouse effect gases to be reduced, and, the fluctuation in $N_2O$ decomposition rate makes it difficult to stably reduce the emission of $N_2O$, and thus is unfavorable.

Since the deterioration in iron-zeolite based catalysts is caused by changes in catalyst structure, the recovery of the $N_2O$ decomposition rate requires the replacement of the catalysts with new catalysts. Conventionally, total replacement of the catalysts has been frequently carried out at the timing when the $N_2O$ decomposition rate reaches a predetermined value or lower.

However, even the catalysts to be replaced because the $N_2O$ decomposition rate has reached a predetermined value or lower still have the $N_2O$ decomposition ability at such a level that the $N_2O$ decomposition rate is a predetermined value or lower. In the above conventional technique in which total replacement of the catalysts is frequently carried out, there was a problem that the catalysts were disposed of wastefully at the stage where the $N_2O$ decomposition ability of the catalysts had not yet been fully utilized, thereby causing increase in total amount of the catalysts used.

Prior Art Documents

Patent Documents

Patent Document 1: JP 2009-183827 A

Patent Document 2: JP 2001-286736 A
Patent Document 3: JP 2004-537403 T

Summary of the Invention

Problem to Be Solved by the Invention

An object of the present invention is to provide a system and a method for removing $N_2O$ from an exhaust gas, which can solve the above problem, improve the rate of utilization of the $N_2O$ decomposition ability inherently possessed by $N_2O$ decomposition catalysts and also reduce the total amount of the catalysts used to maintain the emission of $N_2O$ within a predetermined reduction target range.

[Means for Solving the Problem]

The $N_2O$ removing system and method of the present invention, which has been made to solve the above problem, are defined by claims 1 and 4. Preferred embodiments are comprised in the dependent claims.

Effect of the Invention

The $N_2O$ removing method according to the present invention has such a feature that an $N_2O$ removing system comprising a plurality of gas flow passages and catalyst packed layers packed with $N_2O$ decomposition catalysts, which are alternately arranged, wherein the gas flow passages next to each other via the catalyst packed layers comprise a gas introduction passage and a gas discharge passage, and wherein the respective gas flow passages are provided with valves sequentially opened along with the deterioration of $N_2O$ catalysts due to their time-dependent changes to cumulatively increase the number of the catalyst packed layers used, is used so that valves are opened along with time-dependent changes after the beginning of $N_2O$ removal treatment to cumulatively increase the number of the catalyst packed layers used. According to the feature, even when the $N_2O$ decomposition ability of the $N_2O$ decomposition catalysts is lowered to a predetermined value or less, the emission of $N_2O$ can be maintained within a reduction target range by addition of new $N_2O$ decomposition catalysts, not by a means of replacement of the $N_2O$ decomposition catalysts. Therefore, the rate of utilization of the $N_2O$ decomposition ability inherently possessed by $N_2O$ decomposition catalysts can be improved. According to the feature of the present invention, it is also possible to continue to use the deteriorated catalysts, and thus the total amount of the catalysts used for maintaining the emission of $N_2O$ within a predetermined reduction target range can be decreased.

The invention as claimed in claim 5, due to the feature of, during the $N_2O$ removal treatment, newly opening valves to add the catalyst packed layers used, at the stage where the $N_2O$ decomposition rate of the $N_2O$ removing system has fallen below a target value, thereby sequentially increasing the total amount of the catalysts used for the $N_2O$ removal treatment, can provide stable $N_2O$ decomposition ability of the $N_2O$ removing system as a whole and realize stable control of the $N_2O$ decomposition rate within a predetermined range.

According to the invention as claimed in claim 6, the feature of, after use of all the catalyst packed layers, selectively stopping the valve of the gas introduction passage for gas introduction to the catalyst packed layer used for the longest time, at the stage where the $N_2O$ decomposition rate of the $N_2O$ removing system has fallen below a target value, replacing the catalyst of the catalyst packed layer with a new catalyst, and, thereafter, using the layer as a new catalyst packed layer, can reduce the total amount of the catalyst used for maintaining the emission of $N_2O$ within a predetermined reduction target range.

Brief Description of the Drawings

FIG. 1 is an upper cross sectional view of an $N_2O$ removing system according to the present invention.
FIG. 2 is an A-A cross sectional view of FIG. 1.
FIG. 3 is a B-B cross sectional view of FIG. 1.
FIG. 4 is a front cross sectional view of a radial reactor.
FIG. 5 is a view showing the $N_2O$ decomposition rate and amount of catalysts used in an $N_2O$ removing method according to the present invention.
FIG. 6 is a view showing the $N_2O$ decomposition rate and amount of catalysts used in a conventional $N_2O$ removing method. Modes for Carrying out the Invention

Hereinafter, preferred embodiments of the present invention are illustrated.

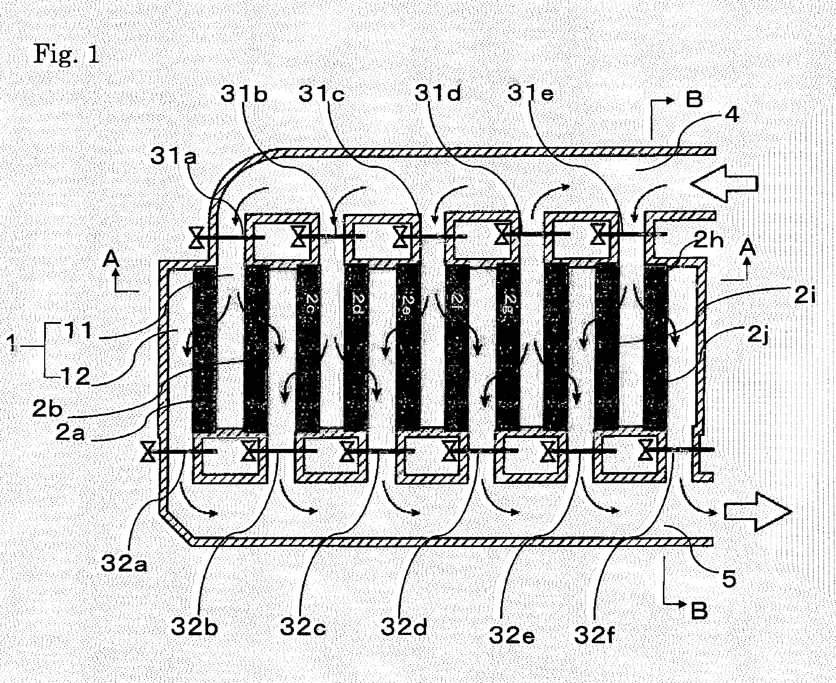

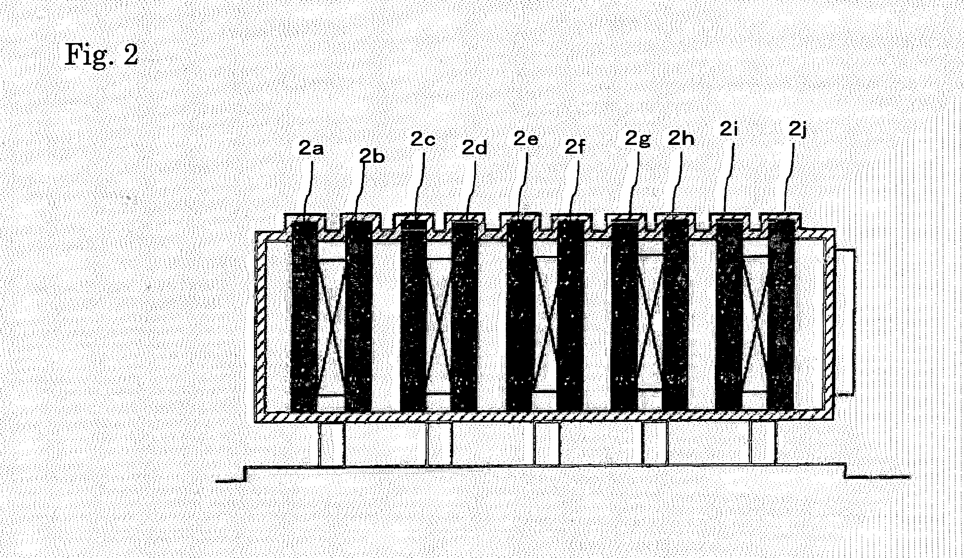

The N$_2$O removing system of the present invention has a plurality of gas flow passages 1 and catalyst packed layers 2 (2a to 2j) packed with N$_2$O decomposition catalysts, which are alternately arranged, as shown in FIG. 1 and FIG. 2.

The catalyst packed layers 2 (2a to 2j) are formed as vertical layers having opening/closing parts at their upper and lower ends, thereby facilitating pouring and discharge of the catalysts with gravity. Thus, the catalyst packed layers 2 (2a to 2j) are preferably formed as vertical layers from the viewpoint of improvement in catalyst packing and replacement operabilities.

The gas flow passage 1 comprises gas introduction passages 11 for introducing an exhaust gas into the N$_2$O removing system and gas discharge passages 12 for discharging the exhaust gas after catalyst treatment from the N$_2$O removing system, and the gas introduction passages 11 and gas discharge passages 12 are alternately arranged via the catalyst packed layers 2.

Inlet side valves 31 for controlling gas introduction are provided at the inlet parts of the gas introduction passages 11, and outlet side valves 32 for controlling gas discharge are provided at outlet parts of the gas discharge passages 12. For example, in FIG. 1, exhaust gases can be selectively flown into the catalyst packed layers 2a and 2b by opening the valves 31a, 32a and 32b and closing the rest of the valves, 31b to 31e and 32c to 32f.

The catalyst packed layers 2 (2a to 2j) are packed with pellet-shaped iron-zeolite based catalysts.

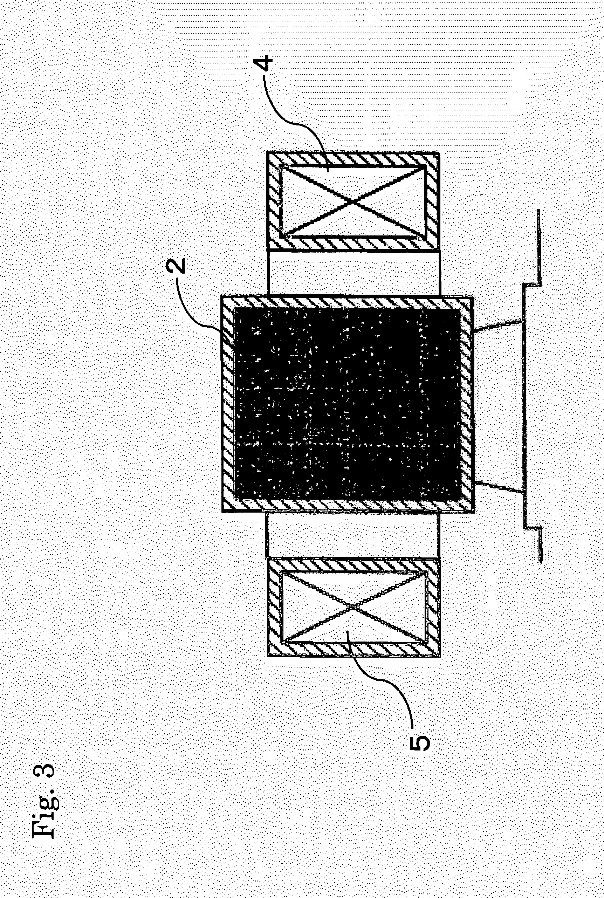

Exhaust gases discharged, for example, from a sewage sludge incinerator are fed from an exhaust gas feed pipe 4 arranged on the side face of the N$_2$O removing system to the gas introduction passage 11 with the inlet side valve 31 being opened, as shown in FIG. 1 and FIG. 3. The exhaust gases go through the gas introduction passage 11 into the adjacent catalyst packed layer 2 in which N$_2$O contained in the exhaust gases is decomposed by the action of the N$_2$O decomposition catalysts. The exhaust gases, which have undergone the N$_2$O removal treatment in the catalyst packed layer 2, go into the adjacent gas discharge passage 12 and then is discharged from an exhaust gas discharge pipe 5 arranged on the side face of the N$_2$O removing system.

The N$_2$O decomposition ability of the iron-zeolite based catalyst packed in the catalyst packed layer 2 of the present invention is known to be lowered by changes in catalyst structure with use. In the present invention, however, the N$_2$O removing system as a whole can maintain the N$_2$O decomposition ability at a predetermined level and can also stably control the N$_2$O decomposition rate within a predetermined range, due to the features of including a plurality of catalyst packed layers 2 and of cumulatively increasing the number of the catalyst packed layers 2 used, along with time-dependent changes immediately after the beginning of the N$_2$O removal treatment.

By virtue of the feature of cumulatively increasing the number of the catalyst packed layers 2 used to maintain the N$_2$O decomposition ability of the catalysts packed in the plurality of catalyst packed layers 2, as a whole, at a predetermined level, the N$_2$O decomposition ability of the whole N$_2$O removing system can be maintained at a predetermined level by starting the use of the catalyst packed layer 2 which has been packed with a new catalyst having high N$_2$O decomposition ability while continuing to employ the catalyst of the catalyst packed layer 2 used for the longest time even after it has been deteriorated at such a level that the catalyst alone has no longer necessary N$_2$O decomposition ability. In this manner, due to the features of the present invention, the deteriorated catalyst can also be continuously used as a catalyst, and thus it is possible to improve the rate of utilization of the N$_2$O decomposition ability, and, as a result, to reduce the total amount of the catalysts used.

Due to the feature that, when the N$_2$O decomposition rate has fallen below a target value after use of all the catalyst packed layers, the catalyst of the catalyst packed layer 2 used for the longest time is replaced with a new catalyst and then used as a new catalyst packed layer, it is possible to reduce the total amount of the catalysts used for maintaining the emission of N$_2$O within a predetermined reduction target range. Examples

The results of trial calculation of the amount of catalysts necessary to carry out the treatment for removal of N$_2$O contained in exhaust gases from a sewage sludge incinerator by using the N$_2$O removing system shown in FIG. 1 are indicated below. The N$_2$O removing system has 10 catalyst packed layers each packed with 4 m$^3$ of catalysts, i.e., the catalysts are packed therein in a total amount of 40 m$^3$.

The following iron-zeolite based catalysts are used as the catalysts.

(Catalyst type)

The iron-zeolite based catalysts produced by the production method described in Patent Document 1 are used. The iron-zeolite based catalysts used in tests are those produced by the production method described in Patent Document 1 and having a pellet shape with a diameter of 2 mm x a length of 5 mm. The zeolite used is β-zeolite and MFI-zeolite.

(Evaluation of catalyst performance)

The N$_2$O decomposition rate y(t,A) t days after the beginning of use under the conditions: space velocity: A/Hr; exhaust gas temperature: 450°C and addition of ammonia as a reducing agent so that the NH$_3$/N$_2$O molar ratio ranges

from 1.0 to 1.3 is expressed by the following formula:

$$y(t,A) = 100 - 100 \times (1 - 0.9996^t)^{2000/A}.$$

For example, at a space velocity of 2000/Hr, the $N_2O$ decomposition rate is almost 100% at the beginning of use, and is reduced to 80% after 4-year use (= 1160 days).

Calculation is conducted under an annual operation rate of 80% (290 days/year), and no allowance of the catalyst amount is considered.

(Conditions for trial calculation)

Catalysts having the above properties were used for a trial calculation of the amount of catalysts necessary to carry out $N_2O$ removal treatment for 10 years to ensure that the annual average value of the $N_2O$ decomposition rate is 80% or higher. The exhaust gases of interest were those discharged from a sewage sludge incinerator (catalyst inlet temperature: 450°C), the flow rate was defined as 52,000 N $m^3$/h.

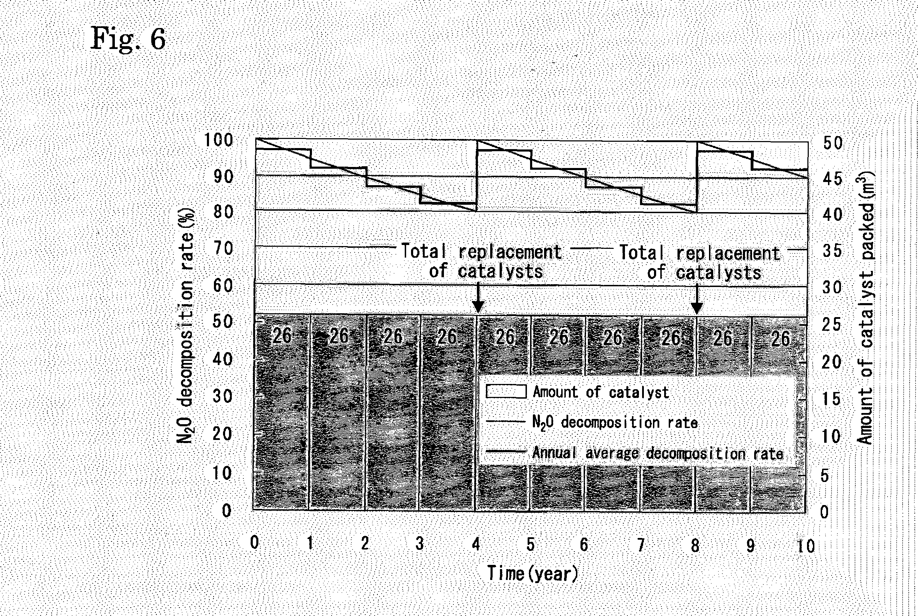

FIG. 6 shows trial calculation results under the conditions that catalysts similar to those described above were used for treatment in an amount of 26 $m^3$ from the first year; at the stage where the $N_2O$ decomposition rate of the catalysts was lowered to 80% after 4-year use, all the catalysts were replaced with 26 $m^3$ of new catalysts; and, after additional 4 years, all the catalysts were also replaced with 26 $m^3$ of new catalysts to maintain the average $N_2O$ decomposition rate for 10 years was maintained at 80%, as a Comparative Example of the method according to the present invention. For the Comparative Example shown in FIG. 4, the total amount of catalysts required for 10 years was 78 $m^3$.

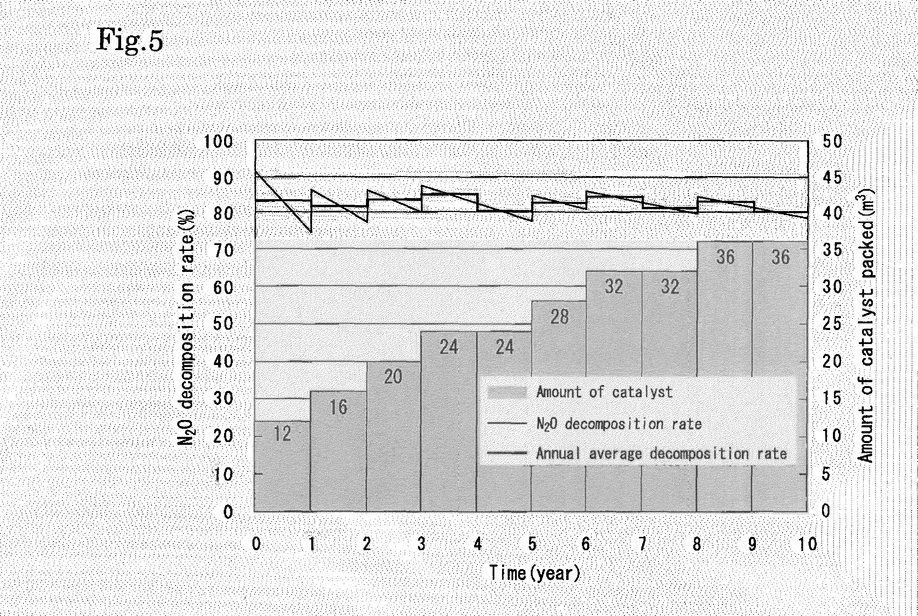

FIG. 5 shows trial calculation results under the conditions that, in accordance with the method of the present invention, the valves were used in the first year in the state where the valves 31a, 31b, 32a and 32b were opened and the rest of the valves are closed; treatment was made in three catalyst packed layers (catalyst amount: 12 $m^3$) ; and, at the stage where the annual average value of the $N_2O$ decomposition rate was 80% or lower, the number of the catalyst packed layers used was increased.

According to the method of the present invention, the catalysts immediately after the beginning of use have high performance, and thus can ensure high performance in a small amount (under high SV conditions). However, the decomposition performance of the catalysts is lowered with use, and, after one year, 12 $m^3$ of the catalysts become insufficient to maintain an annual average $N_2O$ decomposition rate of 80% or higher. Therefore, in the second year, 4 $m^3$ of new catalysts are added to 12 $m^3$ of the catalysts which have been used since the first year for exhaust gas treatment. Specifically, in the second year, the valves are used in the state where the valves 31a, 31b, 32a, 32b and 32c are opened and the rest thereof are closed, and four catalyst packed layers (catalyst amount: 16 $m^3$) are used for treatment.

As shown in FIG. 5, the method of the present invention can suppress the total amount of catalysts used for 10 years to 36 $m^3$.

Explanation of Reference Numerals

    1 Gas flow passage
    11 Gas introduction passage
    12 Gas discharge passage
    2 (2a to 2j) Catalyst packed layer
    3 Valve
    31 (31a to 31e) Inlet side valve
    32 (32a to 32f) Outlet side valve
    4 Exhaust gas feed pipe
    5 Exhaust gas discharge pipe
    6 Catalyst bed

**Claims**

**1.** An $N_2O$ removing system comprising a plurality of gas flow passages (1) and catalyst packed layers (2) packed with

N$_2$O decomposition catalysts,
**characterized in that**
the gas flow passages (1) and vertical catalyst packed layers (2) are alternately arranged in parallel
wherein the gas flow passages (1) next to each other via the catalyst packed layers comprise a gas introduction passage (11) having an inlet part and a gas discharge passage (12), and
wherein the respective gas flow passages are provided with inlet side valves (31) at the inlet part sequentially opened along with the deterioration of N$_2$O catalysts due to their time-dependent changes to cumulatively increase the number of the catalyst packed layers used.

2. The N$_2$O removing system according to claim 1, wherein the catalyst packed layers (2) comprise opening/closing parts at their upper and lower ends.

3. The N$_2$O removing system according to claim 1 or 2, wherein the N$_2$O decomposition catalysts are pellet-shaped iron-zeolite based catalysts.

4. A method for removing N$_2$O from an exhaust gas, comprising using the N$_2$O removing system according to any one of claims 1 to 3 to control the number of the catalyst packed layers (2) used by opening or closing of the inlet side valves (31),
wherein the number of the catalyst packed layers used is cumulatively increased along with time-dependent changes after the beginning of N$_2$O removal treatment.

5. The N$_2$O removing method according to claim 4, comprising, during the N$_2$O removal treatment, newly opening inlet side valves (31) to add the catalyst packed layers used, at the stage where the N$_2$O decomposition rate of the N$_2$O removing system has fallen below a target value, thereby sequentially increasing the total amount of the catalysts used for the N$_2$O removal treatment.

6. The N$_2$O removing method according to claim 5, comprising, after use of all the catalyst packed layers, selectively stopping the inlet side valve (31) of the gas introduction passage (11) for gas introduction to the catalyst packed layer (2) used for the longest time, at the stage where the N$_2$O decomposition rate of the N$_2$O removing system has fallen below a target value, replacing the catalyst of the catalyst packed layer with a new catalyst, and, thereafter, using the layer as a new catalyst packed layer.

**Patentansprüche**

1. N$_2$O-Entfernungssystem, umfassend eine Vielzahl von Gasströmungsdurchlässen (1) und Katalysator-beladenen Schichten (2), die mit N$_2$O-Abbaukatalysatoren beladen sind,
**dadurch gekennzeichnet, dass**
die Gasströmungsdurchlässe (1) und die vertikalen Katalysator-beladenen Schichten (2) abwechselnd parallel zueinander angeordnet sind;
wobei die Gasströmungsdurchlässe (1) nebeneinander über die Katalysator-beladenen Schichten einen Gaseinbringungsdurchlass (11) umfassen, der einen Einlassteil und einen Gasabgabedurchlass (12) aufweist, und wobei die entsprechenden Gasströmungsdurchlässe mit Einlassseitenventilen (31) am Einlassteil bereitgestellt sind, die mit der Verschlechterung von N$_2$O-Katalysatoren aufgrund ihrer zeitabhängigen Veränderungen der Reihe nach geöffnet werden, um die Anzahl der verwendeten Katalysator-beladenen Schichten kumulativ zu erhöhen.

2. N$_2$O-Entfernungssystem nach Anspruch 1, wobei die Katalysator-beladenen Schichten (2) an ihren oberen und ihren unteren Enden Öffnungs-/Verschlussteile umfassen.

3. N$_2$O-Entfernungssystem nach Anspruch 1 oder 2, wobei die N$_2$O-Abbaukatalysatoren pelletförmige Eisen-Zeolith-basierte Katalysatoren sind.

4. Verfahren zum Entfernen von N$_2$O aus einem Abgas, umfassend das Verwenden des N$_2$O-Entfernungssystems nach einem der Ansprüche 1 bis 3, um die Anzahl der Katalysator-beladenen Schichten (2) zu steuern, die durch Öffnen oder Schließen der Einlassseitenventile (31) verwendet werden,
wobei die Anzahl der verwendeten Katalysator-beladenen Schichten mit zeitabhängigen Änderungen nach dem Beginn der N$_2$O-Entfernungsbehandlung kumulativ erhöht wird.

**5.** Verfahren zur Entfernung von $N_2O$ nach Anspruch 2, umfassend, während der $N_2O$-Entfernungsbehandlung, das neue Öffnen von Seiteneinlassventilen (31), um die verwendeten Katalysator-beladenen Schichten hinzuzufügen, in einem Stadium, in dem die $N_2O$-Abbaurate des $N_2O$-Entfernungssystems unter einen Zielwert gefallen ist, wodurch die Gesamtmenge der für die $N_2O$-Entfernungsbehandlung verwendeten Katalysatoren sequenziell erhöht wird.

**6.** $N_2O$-Entfernungsverfahren nach Anspruch 5, umfassend, nach der Verwendung aller Katalysator-beladenen Schichten, ein selektives Stoppen des Einlassseitenventils (31) des Gaseinbringungsdurchlasses (11) zur Gaseinbringung für die Katalysator-beladene Schicht (2), die am längsten verwendet wurde, in einem Stadium, in dem die $N_2O$-Abbaurate des $N_2O$-Entfernungssystems unter einen Zielwert gefallen ist, das Ersetzen des Katalysators der Katalysator-beladenen Schicht mit einem neuen Katalysator und anschließend das Verwenden der Schicht als neue Katalysator-beladene Schicht.

**Revendications**

**1.** Système d'élimination du $N_2O$ comprenant une pluralité de passages d'écoulement de gaz (1) et des couches garnies de catalyseur (2), garnies avec des catalyseurs de décomposition du $N_2O$,
**caractérisé en ce que**
les passages d'écoulement de gaz (1) et les couches garnies de catalyseur verticales (2) sont disposés alternativement en parallèle ;
dans lequel les passages d'écoulement de gaz (1) les uns à côté des autres via les couches garnies de catalyseur comprennent un passage d'introduction du gaz (11) ayant une partie d'entrée et un passage d'évacuation du gaz (12), et
dans lequel les passages d'écoulement de gaz respectifs sont dotés de vannes latérales d'entrée (31) au niveau de la partie d'entrée, ouvertes séquentiellement en fonction de la détérioration des catalyseurs de $N_2O$ du fait de leurs changements en fonction du temps, pour accroître cumulativement le nombre de couches garnies de catalyseur utilisées.

**2.** Système d'élimination du $N_2O$ selon la revendication 1, dans lequel les couches garnies de catalyseur (2) comprennent des parties d'ouverture/de fermeture au niveau de leurs extrémités supérieure et inférieure.

**3.** Système d'élimination du $N_2O$ selon la revendication 1 ou 2, dans lequel les catalyseurs de décomposition du $N_2O$ sont des catalyseurs à base de fer-zéolite sous forme de granulés.

**4.** Procédé d'élimination du $N_2O$ d'un gaz d'échappement, comprenant l'utilisation du système d'élimination du $N_2O$ selon l'une quelconque des revendications 1 à 3 pour réguler le nombre de couches garnies de catalyseur (2) utilisées par l'ouverture ou la fermeture des vannes latérales d'entrée (31),
dans lequel le nombre de couches garnies de catalyseur utilisées croît de manière cumulative en fonction des changements dans le temps après le début du traitement d'élimination du $N_2O$.

**5.** Procédé d'élimination du $N_2O$ selon la revendication 4, comprenant, au cours du traitement d'élimination du $N_2O$, une nouvelle ouverture des vannes latérales d'entrée (31) pour ajouter les couches garnies de catalyseur utilisées, au moment où le taux de décomposition du $N_2O$ du système d'élimination du $N_2O$ tombe en dessous d'une valeur cible, accroissant ainsi séquentiellement la quantité totale des catalyseurs utilisés pour le traitement d'élimination du $N_2O$.

**6.** Procédé d'élimination du $N_2O$ selon la revendication 5, comprenant, après l'utilisation de toutes les couches garnies de catalyseur, l'arrêt sélectif de la vanne latérale d'entrée (31) du passage d'introduction de gaz (11) pour l'introduction de gaz dans la couche garnie de catalyseur (2) utilisée pendant la durée la plus longue, au moment où le taux de décomposition du $N_2O$ du système d'élimination du $N_2O$ tombe en dessous d'une valeur cible, le remplacement du catalyseur de la couche garnie de catalyseur par un nouveau catalyseur, et, ensuite, l'utilisation de la couche en tant que nouvelle couche garnie de catalyseur.

Fig. 1

Fig. 2

Fig. 3

EP 2 548 629 B1

Fig. 4

Fig.5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009183827 A
- JP 2001286736 A
- JP 2004537403 T